# EUROPEAN PATENT SPECIFICATION

(11) **EP 1 709 863 B1**
(45) Date of publication and mention of the grant of the patent: **12.03.2008**
(21) Application number: 06012624.0
(22) Date of filing: 20.06.2006
(51) Int. Cl.: A01G 9/12

(54) **Assembly of several reels with guide wires for crops and operation carriage for it**
Mehrzählige Wickelrollenanordnung mit Führungsdräten für Saaten und Arbeitswagen dafür
Ensemble de plusieurs bobines de fils de guidage pour les cultures et charriot d'opération

(30) Priority: 20.06.2005 NL 1029293; 25.07.2005 NL 1030183; 14.11.2005 NL 1030420
(43) Date of publication of application: 11.10.2006
(73) Proprietor: Tawfik, Ayman, 2551 ZB Den Haag (NL)
(72) Inventor: Tawfik, Ayman, 2551 ZB Den Haag (NL)
(74) Representative: Ferguson, Alexander

(56) References cited:
- EP-A- 1 491 087

## Description

### BACKGROUND OF THE INVENTION

The invention relates to facilities for handling reels with guide wires for crops, particularly horticultural crops, such as tomato plants. Such reels are suspended from an overhead rail or the like. The guide wires extend downwards from the reels to form an engagement and guide for the plants (see e.g. EP 1491087).

Known are reels with guide wires that have partially been wound around the reels and have partially been secured to the reel by means of a clamp. When removing the clamp a part of the guide wire drops down to be connected to a plant. Such reels have to be taken out of a box one by one. Placing the clamp moreover is an additional operation. When installing the reels above the plants the clamp may prematurely become detached. When dropping down usually half the released guide wire gets tangled, as a result of which the installed reels need to be checked afterwards. This takes a lot of time. The clamp will subsequently drop to the floor and needs to be removed from there.

It is furthermore known to store reels with guide wires that have partially been wound around it, in layers in a cardboard box. A layer of free end portions of the guide wires covers each layer of reels. A drawback of such storage is that the guide wires get tangled during transportation of the box and when taking the guide wires out of the box. As a result the guide wires are difficult to separate. When pulling a guide wire out of the loose tangle of guide wires, the tangle may get even further tangled. Per storage layer a tangle of guide wire needs to thrown out of the box, whereby the suspension process needs to be repeatedly interrupted.

It is an object of the invention to improve on this.

It is an object of the invention to provide a facility for handling reels with guide wires for crops, with which reels can be suspended quickly.

### SUMMARY OF THE INVENTION

From a first aspect the invention provides an assembly of several reels with guide wires for crops, particularly in a storage container, wherein the guide wires have partially been wound around the reels and partially extend away from the reels with a free end portion, wherein of at least a number of the reels the free end portions of the guide wires have been joined together with joining means.

Due to the joining together in a group using joining means, the guide wires can be situated in an orderly manner in, on or near a storage container for the assembly. Due to the joining together the guide wires can moreover remain unidirectionally oriented one to the other, as a result of which the guide wires getting tangled when taking a reel out of the assembly can be counteracted. The joining means may furthermore mark a clear point of engagement for in an as orderly as possible way taking out or taking away the guide wires out of the storage container when this is necessary. Said point of engagement can also be utilised for placing the bundle of end portions at a relatively fixed point, such as one on which the storage container may be supported. When placing the reels on an overhead rail or the like the end portions of the guide wires due the joining means can be held in a controlled manner, at a selected place. After placing one of more reels the joining can be ended of its own accord.

From a further aspect the invention provides an assembly of several reels with guide wires for crops, and a storage container for the reels, preferably as stated above, wherein the guide wires have partially been wound around the reels and partially extend away from the reels with a free end portion, wherein the reels are situated in the storage container in several storage layers and the free end portions of at least a number of the reels of the several storage layers have been joined together. Due to joining together the free end portions of several storage layers can be made ready in one go for placing the reels. In this way time can be gained.

Preferably the assembly comprises joining means for keeping together the end portions of the guide wires that have been brought together.

The free ends can particularly be made ready fast when the storage container comprises a box that preferably can be closed off, wherein the free end portions of the guide wires of the reels in the storage container can be unfolded from the storage container.

In one embodiment the reels in the storage container have been placed in at least one storage layer, wherein the end portions of at least a number of the reels, preferably of all reels of said storage layer, have been brought together or joined together.

Preferably the reels in the storage container form several storage layers stacked onto each other, wherein the free end portions of the guide wires of at least a number of the reels, preferably all reels in each storage layer in the storage container have been brought together or joined together. The storage capacity of the storage container, or the storage container itself, can thus be increased whereas the guide wires still remain manageable in an orderly manner.

In a further embodiment the free end portions of the guide wires of reels situated in different storage layers have been brought together or joined together.

If the free end portions of the guide wires of all reels in the storage container have been joined together, the collective guide wires of the entire storage container can be managed as one unity.

In one embodiment several bundles of end portions have been joined together as sub bundles. The guide wires may thus in a first step be taken out of the storage container in one go as joined sub bundles, after which in consecutive steps, for instance after ending the collective joining, the guide wires can be taken out of the sub bundle one by one.

The joining means may comprise a passage opening for the free end portions, wherein the joining means preferably are adapted and/or adjusted to taking the joined free end portions one at a time from the joining means, preferably by sliding, preferably while exerting a slight resistance or retaining force on the end portions during sliding. By exerting a slight resistance or retaining force the guide wires are able to remain in the orderly bundle at the location of the joining means, whereas simultaneously one of the wires is taken out of the bundle.

Alternatively or in addition the joining means exert a clamping force on the wires, yet allow the pulling out of a wire. In that way when placing for instance one reel, the wire connected thereto can be pulled out of the bundle, whereas the bundle remains further intact.

In a simple embodiment the joining means comprise a sleeve, preferably of paper or cardboard, which is preferably formed with a sheet or leaf wound around the bundle, wherein the length of the sleeve preferably is a multitude of the thickness of the joined guide wires.

Preferably the joining means comprise a ring, preferably an elastic ring, preferably an elastic band, which is preferably situated around the sleeve. The sheet can then be secured around the bundle by hand by arranging the elastic band.

The joining together can simply be ended by hand when the joining means can be broken.

The holding power for maintaining the order of the bundle at the location of the joining means can remain substantially constant while the bundle becomes smaller when the joining means are elastic for adjusting the inner size to the thickness of the bundle of guide wires.

The free end portions of the guide wires of the reels, considered in their longitudinal direction in the direction of the free end portion, can be joined past the middle of the free end portions. At this joining position the guide wires can remain orderly over large part of the length.

The free ends can quickly be taken out of the storage container from the top when in the storage container the free end portions of the guide wires of the reels that have been brought together or joined together are jointly situated on top of a storage layer. The reels may in particular form several storage layers stacked onto each other, wherein in the storage container the free end portions of the guide wires of the reels that have been brought together or joined together are jointly situated on top of the top storage layer. In that case the guide wires can then be taken out of the storage container from the top in one go, for instance by taking them by the joining means, in order to make them ready for suspending the reels.

Tangling of the reels with the free ends stored on top of them can be counteracted when the assembly comprises a separation piece placed between the (top) storage layer and the free end portions on top of said storage layer.

Tangling of the reels of reels situated on top of each other can be counteracted when the reels in the storage container form several storage layers stacked onto each other, wherein the storage layers are separated from each other by means of one or several separation pieces situated in between them.

The free ends of several storage layers getting tangled into each other can be counteracted when the separation pieces are sheet-shaped or leaf-shaped, preferably made of paper or cardboard, wherein the separation pieces extend substantially parallel to each other, wherein the separation pieces preferably at one side comprise an upright separating part or upright edge for guiding the free end portions of the guide wires of several storage layers along and/or between said upright edges to an unpack opening of the storage container.

The separation pieces may extend over at least the reel portions and the unwind ends of the reels.

Preferably the length of the free end portions of the guide wires forms a multitude of the length of one winding of the guide wire around a reel. The free end portions of the guide wires of the reels may have substantially the same length, so that the free ends after installation of the reels are hanging at substantially the same level above the floor.

From a further aspect, the invention further provides an operation carriage for installing reels with guide wires for crops situated in a storage container, preferably the reels of the assembly according to the invention, wherein the operation carriage comprises holding means for guide wires from the storage container, wherein the holding means are adapted for detachably holding the free end portions of the guide wires, preferably the end portions of the guide wires that have been joined or brought together, preferably together with the joining means. The operation carriage can ride along an overhead rail. As the free ends can be detachably secured to the operation carriage, the reels can be suspended from the rail, after which the free ends due to the operation carriage moving onward can be pulled out of the holding means of their own accord in a controlled manner. The joining together is then ended.

Preferably the holding means are adapted for under slight resistance removing or pulling out the free end portions out of the holding means, wherein the holding means preferably comprise a clamp, an elastic band or a rope for clamping the free end portions against a fixed section or frame of the holding means, wherein the holding means preferably comprise coiling or faking means for turning over or turning back the free end portions of the guide wires, wherein the coiling or faking means preferably comprise an eye for passing the guide wires through.

From a further aspect the invention provides a method for handling several reels with guide wires for crops, wherein the guide wires have partially been wound around the reels and partially extend away from the reels with a free end portion, wherein the method comprises the placing of the reels in the storage container, the joining together of the free end portions using joining means, the placing of the joined end portions in the storage container, placing the joined end portions out of the storage container again, and taking the free end portions out of the bundle one by one, wherein during the method the bundle is maintained by using the same joining means.

The aspects and measures described in this description and claims of the application and/or shown in the drawings of this application may where possible also be used individually. Said individual aspects may be the subject of divisional patent applications relating thereto. This particularly applies to measures and aspects described per se in the sub claims.

### SHORT DESCRIPTION OF THE DRAWINGS

The invention will be elucidated on the basis of a number of exemplary embodiments shown in the attached drawings, in which:
Figure 1 shows a view in perspective of an assembly according to the invention, in an initial position;
Figures 2A and 2B show a view in perspective and in cross-section, respectively, of a box with partially therein the assembly according to figure 1, in a last stage of packaging;
Figure 3 shows a view in perspective of the box with the assembly according to figures 2A and 2B, immediately prior to closing it off;
Figure 4 shows a side view of an operation carriage on which the box with the assembly according to figures 2A and 2B has been placed;
Figures 5A and 5B show front views, partially in cross-section, of details of the operation carriage according to figure 4; and
Figure 6 schematically shows a process of installing reels of the assembly according to figure 1.

### DETAILED DESCRIPTION OF THE DRAWINGS

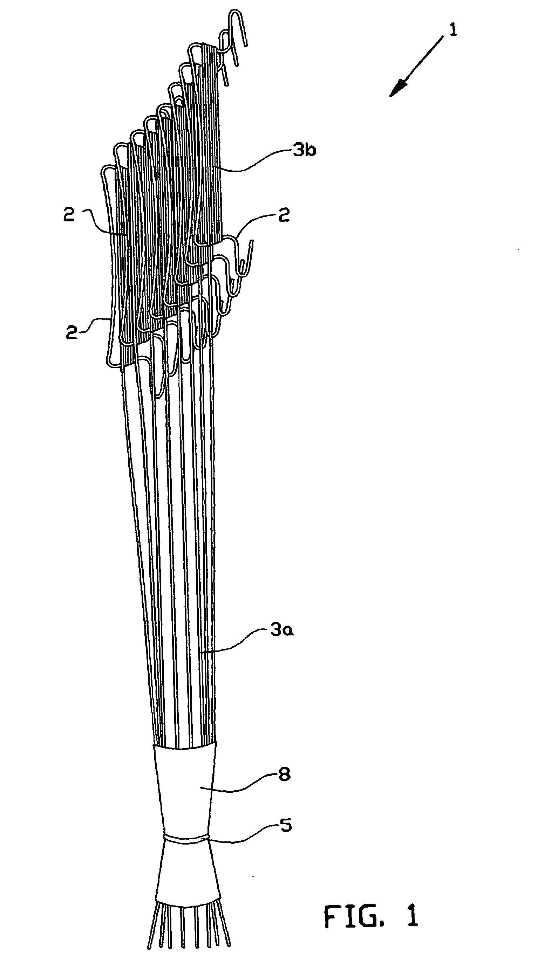

The crop hook assembly 1 shown in figure 1 comprises a number of reels 2 that are known per se and which with a hook portion can be hooked onto an overhead horizontal cable, rail or the like in a greenhouse, in order to hang vertically downward. Around each reel 2 a crop or guide wire 3 has been wound, having a wound portion 3b and a free end portion 3a. The free end portion 3a may have a length that is a multitude of one winding or turn. The length is adjusted to the height of a greenhouse, for instance of the order of magnitude thereof.

Near the end of the free end portion 3a the guide wires 3 are held together or joined together by means of a paper bush or sleeve 8 of some length, for instance some decimetres, for instance 40 centimetres, that has been wound around the guide wires 3 as joining means. Around the sleeve 8 an elastic band 5 has been tied, as a result of which the sleeve 8 exerts a light pressure on the guide wires 3. Alternatively only the elastic band 5 can be arranged near the end of the free end portions 3a. Because of the joining, the free end portions 3a remain orderly, wherein the ends at the location of the sleeve 8 are kept parallel to each other. For the sake of clarity figure 1 shows only eight reels 2 with joined guide wires 3: the assembly may however contain dozens of reels 2 with joined guide wires 3.

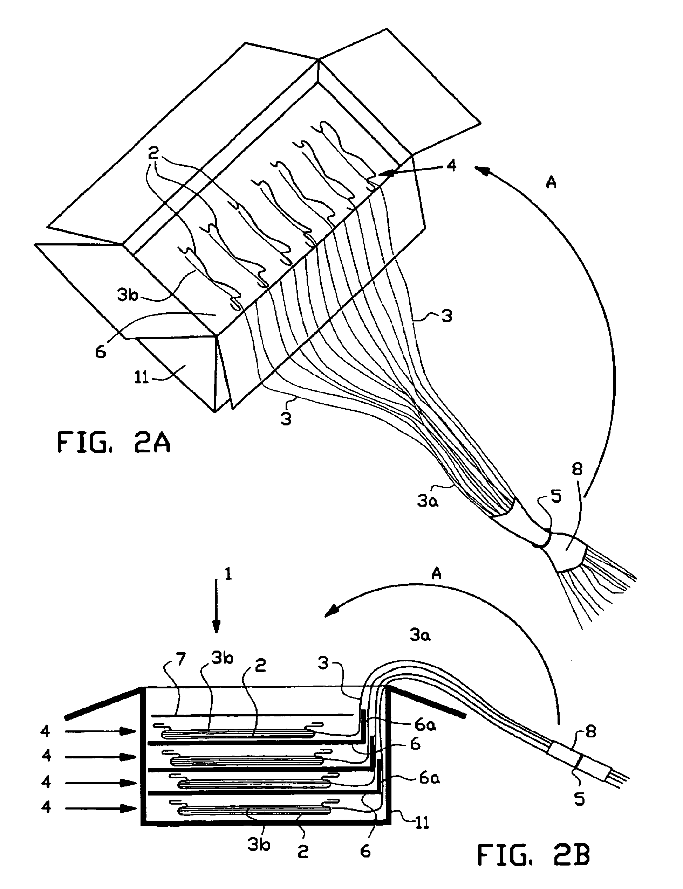

Figures 2A and 2B show a cardboard box 11 for packaging the assembly 1, in a last stage of packaging. The reels are in that case situated per sub group in storage layers 4. From each layer 4 the end portions 3a extend out of the box 11. A cardboard separation plate 6 has been placed between each storage layer 4. Said plates 6 have an upright edge 6a, which for each consecutive storage layer 4, lies a little further to the inside. The upright edges 6a have a height that exceeds the thickness of the partially wound reels 2. The edges 6a keep the end portions 3a per storage layer 4 separated from each other. On top of the top layer of reels 2 a top separation plate 7 is placed, which has a recessed position with respect to the upper edge of the box 11.

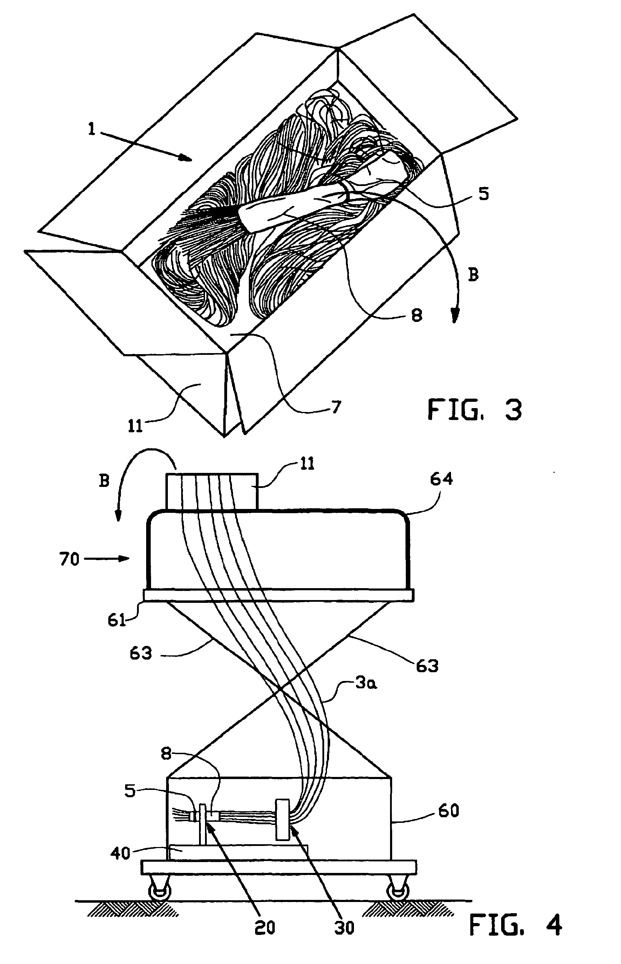

When filling the box 11 the free end portions 3a are initially separate from each other, but substantially similarly oriented. After filling the box 11 by placing the reels 2 in the shown manner, the free end portions 3a can easily be brought together and joined by means of for instance the sleeve 8 and the elastic band 5. Such a bundle for instance contains 400-500 guide wires 3. Subsequently the joined free end portions 3a can be laid in the direction A on the top separation plate 7. The bundle can thus be properly handled by grasping it in the middle of the sleeve 8. The situation as shown in figure 3 is then achieved, and the box 11 can be closed. During transportation, particularly to a greenhouse, there is no risk of the free end portions 3a getting tangled. They remain joined and remain orderly at the ends.

Of a box 11 the free end portions 3a of all reels 2 can be joined together. This may also be the case with sub bundles, per storage layer 4, and then be joined together into one large bundle. Alternatively the free end portions 3a can be joined together per storage layer 4 and per storage layer be laid onto the reels 2, optionally separated by a separation plate 6. Alternatively the free end portions 3a can be laid on the top storage layer 4 as a bundle without joining means. The way of joining is adjusted to the need and to the type of box 11. Alternatively the free end portions 3a can be joined as sub bundle per storage layer 4, after which the sub bundles have been brought together or joined into a collective bundle.

Figure 4 shows an operation carriage or tomato carriage 70 comprising a mobile frame 60, a lift platform 61 and a lift mechanism that is not shown for scissored lifting arms 63 for adjusting the level of the platform 61. An opened box 11 has been placed on the lift platform 61, wherein the free ends 3a have been turned out of the opened box 11 in direction B and hang joined over the railing 64. Several boxes 11 at a time can be placed on the operation platform 61, wherein the one bundle hangs down at the one side of the operation carriage 70 and the other bundle at the other side of the operation carriage 70.

The joined ends of the wire portions 3a are held removably on the frame 60 of the operation carriage 70. For that purpose the frame 60 is provided with an aiming facility 30 and a clamping facility 20. Below it a guide plate 40 is attached to the frame 60, at least on the left-hand side below the aiming facility 30, in order to prevent released wires 3 from dragging over the floor. The clamping facility 20 holds the bundle, wherein the aiming facility limits the freedom of movement of the bundle with respect to the operation carriage 70.

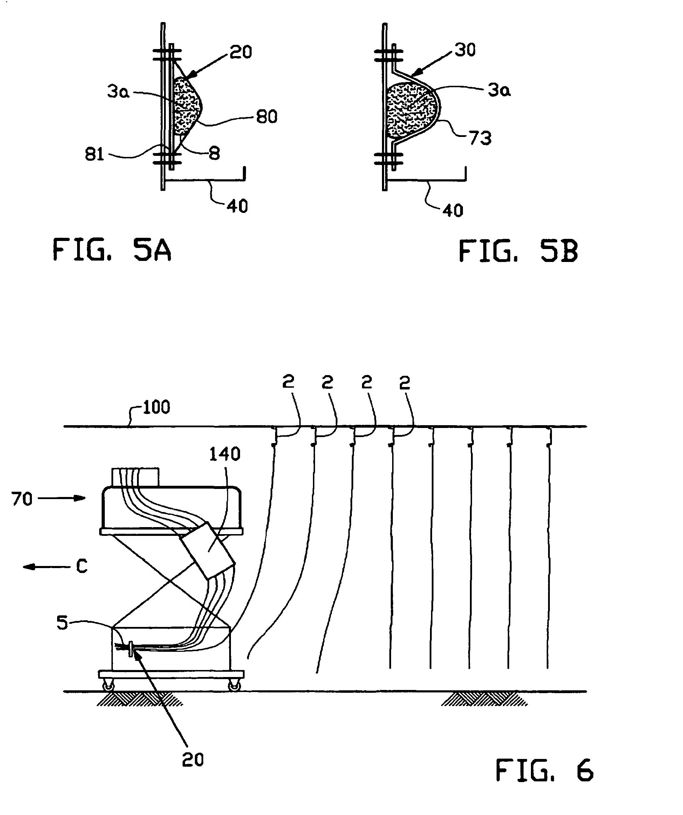

The clamping facility 20, shown in detail in figure 5A, comprises a rigid strip 81 attached to the frame 60, and an elastic strip 80 which at the ends is connected to the rigid strip 81. The elastic strip 80 can also be directly attached to the operation carriage 70. Without a bundle accommodated therein, the elastic strip 80 abuts the rigid strip 81. The bundle together with the sleeve 8 and the elastic band 5 has been inserted between the elastic strip 80 and the rigid strip 81, wherein the end of the bundle extends approximately 40 centimetres from the elastic 80. The elasticity and length of the elastic strip 80 is such that when taking the guide wires 3 one by one out of the sleeve 8 it follows the ever decreasing girth of the sleeve 8. Thus the sleeve 8 and as a result the bundle of guide wires 3 is held under slight pressure in order to keep it connected to the frame 60.

The clamping facility 20 can also be attached to other parts of the operation carriage 70, for instance on the lifting arms 63 or the lift platform 61. The clamping facility 20 may also be attached by means of for instance double-sided adhesive tape or with magnets.

The aiming facility 30, shown in detail in figure 5B, comprises a semicircular bracket 73 which is screwed onto the frame 60. The bundle lies loosely under the bracket 73. Instead of the bracket 73 a ring, eye, tube or funnel may also be used. In figure 6 a tube 140 is used which is attached to the side of the lift platform 61. The aiming facility 30 can also be attached to the lifting arms 63 or the lift platform 61. The aiming facility 30 can also be attached to the operation carriage 70 by means of double-sided adhesive tape or magnets.

The clamping facility 20 and the aiming facility 30 can be used individually. It is for instance possible to insert the bundle through the aiming facility 30 and leave the sleeve 8 with the elastic band 5 as joining means outside of the clamping facility 20. The bundle then remains hanging downward under its own weight, also during moving the guide wire 3 out of the sleeve 8.

When suspending the reels 2 from a horizontal cable 100 as shown in figure 6 a workman brings the lift platform 61 at the desired operation level and a number of reels 2 is grasped from the top layer 4 out of the box 1, the free end portions 3a hanging downward therefrom. The workman is then able to take the reels 2 of the group one by one and suspend them from the cable 100. The operation carriage 70 can then be moved onward in the direction C. In horizontal direction the reels 2 are almost fixed as regards place on the cable or rail 100, so that after a while the hanging free end portion 3a is tautened. The frame 60 moves onward in the direction C, wherein the smoothness of the paper and the guide wire 3 permit that the wire 3 in question is being pulled out of the bundle under slight retaining friction, whereas the other wires 3 remain present in the bundle at the location of the sleeve 8. Finally the free end portion 3a comes to hang rather vertical, as shown in the figure.

## Claims

1. Assembly of several reels with guide wires for crops, particularly in a storage container, wherein the guide wires (3) have partially been wound around the reels (2) and partially extend away from the reels (2) with a free end portion (3a), **caracterised in that** at least a number of the reels (2) the free end portions of the guide wires (3a) have been joined together with joining means.

2. Assembly of several reels with guide wires for crops, and a storage container for the reels, particularly according to claim 1, wherein the guide wires (3a) have partially been wound around the reels (2) and partially extend away from the reels (2) with a free end portion; wherein the reels (2) are situated in the storage container in several storage layers (4), and the free end portions of at least a number of the reels (2) of the several storage layers (4) have been brought together.

3. Assembly according to claim 2, comprising joining means for keeping together the end portions of the guide wires (3a) that have been brought together.

4. Assembly according to any one of the preceding claims, wherein the storage container comprises a box (11) that preferably can be closed off, wherein the free end portions of the guide wires (3a) of the reels (2) in the storage container can be unfolded from the storage container.

5. Assembly according to any one of the preceding claims, wherein the reels (2) in the storage container have been placed in at least one storage layer, wherein the end portions of at least a number of the reels, preferably of all reels (2) of said storage layer, have been brought together or joined together.

6. Assembly according to any one of the preceding claims, wherein the reels (2) in the storage container form several storage layers stacked onto each other, wherein the free end portions of the guide wires (3a) of at least a number of the reels (2), preferably all reels (2) in each storage layer in the storage container have been brought together or joined together.

7. Assembly according to any one of the preceding claims, wherein the free end portions of the guide wires (3a) of reels (2) situated in different storage layers have been brought together or joined together.

8. Assembly according to any one of the preceding claims, wherein the free end portions of the guide wires (3a) of all reels (2) in the storage container have been brought together or joined together.

9. Assembly according to claim 1 or 3 or claims dependent thereon, wherein the joining means comprise a passage opening for the free end portions, wherein the joining means preferably are adapted and/or adjusted to taking the joined free end portions one at a time from the joining means, preferably by sliding, preferably while exerting a slight resistance or retaining force on the end portions during sliding.

10. Assembly according to claim 9, wherein the joining means comprise a sleeve (8), preferably of paper or cardboard, which is preferably formed with a sheet or leaf wound around the bundle, wherein the length of the sleeve preferably is a multitude of the thickness of the joined guide wires.

11. Assembly according to any one of the claims 9 or 10, wherein the joining means comprise a ring, preferably an elastic ring (5) preferably an elastic band, which is preferably situated around the sleeve (8).

12. Assembly according to any one of the claims 9-11, wherein the joining means are elastic for adjusting the inner size to the thickness of the bundle of guide wires (3a).

13. Assembly according to any one of the preceding claims, wherein in the storage container the free end portions of the guide wires of the reels that have been brought together or joined together are jointly situated on top of a storage layer.

14. Assembly according to any one of the preceding claims, wherein the reels (2) form several storage layers stacked onto each other, wherein in the storage container the free end portions of the guide wires (3a) of the reels (2) that have been brought together or joined together are jointly situated on top of the top storage layer.

15. Assembly according to claim 13 or 14, comprising a separation piece placed between the (top) storage layer and the free end portions on top of said storage layer.

16. Assembly according to any one of the preceding claims, wherein the reels (2) in the storage container form several storage layers stacked onto each other, wherein the storage layers are separated from each other by means of one or several separation pieces (7) situated in between them.

17. Assembly according to claim 15 or 16, wherein the separation pieces (7) are sheet-shaped or leaf-shaped, preferably made of paper or cardboard, wherein the separation pieces extend substantially parallel to each other, wherein the separation pieces preferably at one side comprise an upright separating part or upright edge for guiding the free end portions of the guide wires (3a) of several storage layers along and/or between said upright edges to an unpack opening of the storage container.

18. Operation carriage (70) for installing reels (2) with guide wires (3a) for crops situated in a storage container, preferably the reels (2) of the assembly according to any one of the preceding claims, wherein the operation carriage (70) comprises holding means for guide wires (3a) from the storage container, wherein the holding means are adapted for detachably holding the free end portions of the guide wires (3a), preferably the end portions of the guide wires (3a) that have been joined or brought together, preferably together with the joining means (5,8).

19. Operation carriage according to claim 18, wherein the holding means (5,8) are adapted for under slight resistance removing or pulling out the free end portions out of the holding means, wherein the holding means (5,8) preferably comprise a clamp, an elastic band or a rope for clamping the free end portions against a fixed section or frame of the holding means, wherein the holding means preferably comprise coiling or faking means for turning over or turning back the free end portions of the guide wires, wherein the coiling or faking means preferably comprise an eye for passing the guide wires through.

## Patentansprüche

1. Anordnung aus mehreren Spulen mit Führungsdrähten für Kulturpflanzen, insbesondere in einem Aufnahmebehälter, wobei die Führungsdrähte (3) teilweise um die Spulen (2) gewickelt sind und sich mit einem freien Endbereich (3a) teilweise von den Spulen (2) weg erstrecken, **dadurch gekennzeichnet, dass** zumindest bei einer Anzahl der Spulen (2) die freien Endbereiche (3a) der Führungsdrähte durch Zusammenbündelmittel zusammengebündelt sind.

2. Anordnung aus mehreren Spulen mit Führungsdrähten für Kulturpflanzen und einem Aufnahmebehälter für die Spulen, insbesondere nach Anspruch 1, bei der die Führungsdrähte (3) teilweise um die Spulen (2) gewickelt sind und sich mit einem freien Endbereich teilweise von den Spulen weg erstrecken, wobei sich die Spulen (2) in dem Aufnahmebehälter in mehreren Aufnahmeebenen (4) befinden und die freien Endbereiche zumindest einer Anzahl der Spulen (2) der mehreren Aufnahmeebenen (4) zusammengebracht sind.

3. Anordnung nach Anspruch 2, mit Zusammenbündelmittel zum Zusammenhalten der Endbereiche der Führungsdrähte (3), die zusammengebracht wurden.

4. Anordnung nach einem der vorhergehenden Ansprüche, bei welcher der Aufnahmebehälter einen Kasten (11) umfasst, der vorzugsweise verschließbar ist, wobei die freien Endbereiche der Führungsdrähte (3) der Spulen (2) in dem Aufnahmebehälter aus dem Aufnahmebehälter herausgefaltet werden können.

5. Anordnung nach einem der vorhergehenden Ansprüche, bei welcher die Spulen (2) in dem Aufnahmebehälter in mindestens einer Aufnahmeebene angeordnet sind, wobei die Endbereiche zumindest einer Anzahl der Spulen, vorzugsweise sämtlicher Spulen (2) der Aufnahmeebene, zusammengebracht oder zusammengebündelt sind.

6. Anordnung nach einem der vorhergehenden Ansprüche, die der die Spulen (2) in dem Aufnahmebehälter mehrere übereinander gestapelte Aufnahmeebenen bilden, wobei die freien Endbereiche der Führungsdrähte (3) zumindest einer Anzahl von Spulen (2), vorzugsweise sämtlicher Spulen (2) in jeder Aufnahmeebene in dem Aufnahmebehälter zusammengebracht oder zusammengebündelt sind.

7. Anordnung nach einem der vorhergehenden Ansprüche, bei der die freien Endbereiche der Führungsdrähte (3a) von in unterschiedlichen Aufnahmeebenen befindlichen Spulen (2) zusammengebracht oder zusammengebündelt sind.

8. Anordnung nach einem der vorhergehenden Ansprüche, bei der die freien Endbereiche der Führungsdrähte (3) sämtlicher Spulen (2) in dem Aufbewahrungsbehälter zusammengebracht oder zusammengebündelt sind.

9. Anordnung nach Anspruch 1 oder 3 oder auf diese rückbezogene Ansprüche, bei der die Zusammenbündelmittel eine Durchgangsöffnung für die freien Endbereiche aufweisen, wobei die Zusammenbündelmittel vorzugsweise geeignet und/oder angepasst sind, um die verbundenen freien Endbereiche vorzugsweise gleitend einzeln aus den Zusammenbündelmittel zu entnehmen, vorzugsweise unter Aufbringung einer leichten Widerstands- oder Rückhaltekraft auf die Endbereiche während des Gleitens.

10. Anordnung nach Anspruch 9, bei der die Zusammenbündelmittel eine vorzugsweise aus Papier oder Pappe bestehende Hülse (8) umfassen, welche vorzugsweise durch eine um das Bündel gewickelte Bahn oder ein solches Blatt gebildet ist, wobei die Länge der Hülse vorzugsweise ein Vielfaches der Dicke der zusammengebündelte Führungsdrähte beträgt.

11. Anordnung nach einem der Ansprüche 9 oder 10, bei der die Zusammenbündelmittel einen Ring umfassen, vorzugsweise einen elastischen Ring (5), vorzugsweise ein elastisches Band, das vorzugsweise um die Hülse (8) angeordnet ist.

12. Anordnung nach einem der Ansprüche 9-11, bei der die Zusammenbündelmittel zum Anpassen der Innengröße an die Dicke des Bündels der Führungsdrähte (3) elastisch sind.

13. Anordnung nach einem der vorhergehenden Ansprüche, bei welcher in dem Aufbewahrungsbehälter die freien Endbereiche der Führungsdrähte der Spulen, welche zusammengebracht oder zusammengebündelt sind, zusammen auf einer Aufnahmeebene platziert sind.

14. Anordnung nach einem der vorhergehenden Ansprüche, bei der die Spu-len (2) mehrere übereinander gestapelte Aufnahmeebenen bilden, wobei in dem Aufnahmebehälter die freien Endbereiche der Führungsdrähte (3) der Spulen (2), die zusammengebracht oder zusammengebündelt sind, zusammen auf der oberen Aufnahmeebene platziert sind.

15. Anordnung nach Anspruch 13 oder 14, mit einem zwischen der (oberen) Aufnahmeebene und den auf der Aufnahmeebene liegenden freien Endbereichen angeordneten Trennteil.

16. Anordnung nach einem der vorhergehenden Ansprüche, bei der die Spu-len (2) in dem Aufnahmebehälter mehrere übereinander gestapelte Aufnahmeebenen bilden, wobei die Aufnahmeebenen voneinander durch ein oder mehrere zwischen diesen befindliche Trennteile (7) getrennt sind.

17. Anordnung nach Anspruch 15 oder 16, bei der die Trennteile (7) bahn- oder blattförmig sind und vorzugsweise aus Papier oder Pappe bestehen, wobei sich die Trennteile im wesentlichen parallel zueinander erstrecken, wobei die Trennteile vorzugsweise auf einer Seite einen aufragenden Trennbereich oder einen aufragenden Rand zum Führen der freien Endbereiche der Führungsdrähte (3) mehrerer Aufnahmeebenen entlang und/oder zwischen den aufragenden Rändern zu einer Entpackungsöffnung des Aufnahmebehälters aufweisen.

18. Arbeitswagen (70) zum Anbringen von in einem Aufnahmebehälter befindlichen Spulen (2) mit Führungsdrähten (3) für Kulturpflanzen, wobei es sich bei den Spulen (2) vorzugsweise um solche der Anordnung nach einem der vorhergehenden Ansprüche handelt, wobei der Arbeitswagen (70) Halteeinrichtungen für Führungsdrähte (3) aus dem Aufbewahrungsbehälter aufweist, wobei die Halteeinrichtungen ausgebildet sind, um die freien Endbereiche der Führungsdrähte (3), vorzugsweise die zusammengebrachten oder zusammengebündelten Endbereiche der Führungsdrähte (3), vorzugsweise zusammen mit den Zusammenbündelmittel (5, 8) lösbar zu halten.

19. Arbeitswagen nach Anspruch 18, bei dem die Halteeinrichtungen (5, 8) derart ausgebildet sind, dass die freien Endbereiche aus den Halteeinrichtungen unter geringen Widerstand entfernbar oder herausziehbar sind, wobei die Halteeinrichtungen (5, 8) vorzugsweise eine Klammer, ein elastisches Band oder ein Seil zum Klemmen der freien Endbereiche gegen einen festen Bereich oder Rahmen der Halteeinrichtungen aufweisen, wobei die Halteeinrichtungen vorzugsweise Spul- oder Aufschießeinrichtungen zum Vor- und Zurückdrehen der freien Endbereiche der Führungsdrähte aufweisen, wobei die Spul- oder Aufschießeinrichtungen vorzugsweise eine Öse zum Hindurchführen der Führungsdrähte aufweisen.

## Revendications

1. Assemblage de plusieurs bobines de fils-guide pour cultures, en particulier dans un récipient de stockage, dans lequel les fils-guide (3) ont été enroulés partiellement autour des bobines (2) et se prolongent partiellement loin des bobines (2) avec une portion d'extrémité libre (3a), **caractérisé en ce qu'**au moins dans un certain nombre des bobines (2), les portions d'extrémité libre des fils-guides (3a) ont été jointes ensemble à l'aide de moyens de jonction.

2. Assemblage de plusieurs bobines de fils-guide pour cultures, et d'un récipient de stockage pour les bobines, en particulier selon la revendication 1, dans lequel les fils-guide (3a) ont été partiellement enroulés autour des bobines (2) et se prolongent partiellement loin des bobines (2) avec une portion d'extrémité libre, dans lequel les bobines (2) sont situées dans le récipient de stockage sous la forme de plusieurs couches de stockage (4), et dans lequel les portions d'extrémité libre d'au moins un certain nombre des bobines (2) des plusieurs couches de stockage (4) ont été amenées ensemble.

3. Assemblage selon la revendication 2, comprenant des moyens de jonction pour maintenir ensemble les portions d'extrémité des fils-guide (3a) qui ont été amenées ensemble.

4. Assemblage selon l'une quelconque des revendications précédentes, dans lequel le récipient de stockage comprend une boîte (11) qui peut être fermée de préférence, dans lequel les portions d'extrémité libre des fils-guide (3a) des bobines (2) dans le récipient de stockage peuvent être dépliées à partir du récipient de stockage.

5. Assemblage selon l'une quelconque des revendications précédentes, dans lequel les bobines (2) dans le récipient de stockage ont été placées dans au moins une couche de stockage, dans lequel les portions d'extrémité d'au moins un certain nombre de bobines, de préférence de toutes les bobines (2), ont été amenées ensemble ou jointes ensemble.

6. Assemblage selon l'une quelconque des revendications précédentes, dans lequel les bobines (2) dans le récipient de stockage forment plusieurs couches de stockage empilées les unes sur les autres, dans lequel les portions d'extrémité libre des fils-guide (3a) d'au moins un certain nombre des bobines (2), de préférence de toutes les bobines (2), dans chaque couche de stockage dans le récipient de stockage ont été amenées ensemble ou jointes ensemble.

7. Assemblage selon l'une quelconque des revendications précédentes, dans lequel les portions d'extrémité libre des fils-guide (3a) des bobines (2), situées dans différentes couches de stockage, ont été amenées ensemble ou jointes ensemble.

8. Assemblage selon l'une quelconque des revendications précédentes, dans lequel les portions d'extrémité libre des fils-guide (3a) de toutes les bobines (2) dans le récipient de stockage ont été amenées ensemble ou jointes ensemble.

9. Assemblage selon la revendication 1 ou 3, ou selon les revendications qui en dépendent, dans lequel les moyens de jonction comprennent une ouverture de passage pour les portions d'extrémité libre, dans lequel les moyens de jonction sont adaptés et/ou ajustés, de préférence, à prendre les portions d'extrémité libre jointes une à la fois à partir des moyens de jonction, de préférence par glissement, de préférence tout en exerçant une résistance ou une force de rétention faible sur les portions d'extrémité pendant le glissement.

10. Assemblage selon la revendication 9, dans lequel les moyens de jonction comprennent un manchon (8), de préférence fait en papier ou en carton, qui est formé de préférence à l'aide d'une feuille ou d'un feuillet enroulé(e) autour du faisceau, dans lequel la longueur du manchon est, de préférence, un multiple de l'épaisseur des fils-guide joints.

11. Assemblage selon l'une quelconque des revendications 9 ou 10, dans lequel les moyens de jonction comprennent un anneau, de préférence un anneau élastique (5), de préférence une bande élastique, qui est, de préférence, située autour du manchon (8).

12. Assemblage selon l'une quelconque des revendications 9-11, dans lequel les moyens de jonction sont élastiques en vue du réglage de la taille interne à l'épaisseur du faisceau de fils-guide (3a).

13. Assemblage selon l'une quelconque des revendications précédentes, dans lequel, dans le récipient de stockage, les portions d'extrémité libre des fils-guide des bobines qui ont été amenées ensemble ou jointes ensemble sont situées conjointement sur le dessus d'une couche de stockage.

14. Assemblage selon l'une quelconque des revendications précédentes, dans lequel les bobines (2) forment plusieurs couches de stockage empilées les unes sur les autres, dans lequel, dans le récipient de stockage, les portions d'extrémité libre des fils-guides (3a) de bobines (2) qui ont été amenées ensemble ou jointes ensemble sont situées conjointement sur le dessus de la couche de stockage supérieure.

15. Assemblage selon la revendication 13 ou 14, comprenant une pièce de séparation placée entre la couche de stockage (supérieure) et les portions d'extrémité libre sur le dessus de ladite couche de stockage.

16. Assemblage selon l'une quelconque des revendications précédentes, dans lequel les bobines (2) dans le récipient de stockage forment plusieurs couches de stockage empilées les unes sur les autres, dans lequel les couches de stockage sont séparées les unes des autres au moyen d'une ou de plusieurs pièces de séparation (7) situées entre elles.

17. Assemblage selon la revendication 15 ou 16, dans lequel les pièces de séparation (7) sont sous la forme d'une feuille ou sous la forme d'un feuillet, faites de préférence en papier ou en carton, dans lequel les pièces de séparation se prolongent substantiellement de manière parallèle les unes aux autres, dans lequel les pièces de séparation, de préférence, d'un côté, comprennent une partie de séparation verticale ou un bord vertical pour guider les portions d'extrémité libre des fils-guide (3a) de plusieurs couches de stockage le long et/ou entre lesdits bords verticaux à une ouverture de déballage du récipient de stockage.

18. Chariot d'opération (70) en vue de l'installation des bobines (2) avec des fils-guides (3a) pour cultures situées dans un récipient de stockage, de préférence, les bobines (2) de l'assemblage selon l'une quelconque des revendications précédentes, dans lequel le chariot d'opération (70) comprend des moyens de maintien des fils-guide (3a) provenant du récipient de stockage, dans lequel les moyens de maintien sont adaptés au maintien d'une manière amovible des portions d'extrémité libre des fils-guide (3a), de préférence les portions d'extrémité libre des fils-guide (3a) qui ont été jointes ensemble ou amenées ensemble, de préférence assemblées ensemble à l'aide des moyens de jonction (5, 8).

19. Chariot d'opération selon la revendication 18, dans lequel les moyens de maintien (5, 8) sont adaptés au retrait ou à la traction sous faible résistance des portions d'extrémité libre hors des moyens de maintien, dans lequel les moyens de maintien (5, 8) comprennent, de préférence une pince, une bande élastique ou une corde pour attacher les portions d'extrémité libre contre une section ou un cadre fixe des moyens de maintien, dans lequel les moyens de maintien comprennent, de préférence, des moyens de bobinage ou de manipulation en vue de faire tourner ou de faire retourner les portions d'extrémité libre des fils-guide, dans lequel les moyens de bobinage ou de manipulation comprennent, de préférence un chas à travers lequel passent les fils-guide.
